# EUROPEAN PATENT APPLICATION

(11) **EP 0 735 291 A2**
(43) Date of publication of application: **02.10.1996**
(21) Application number: 96302034.2
(22) Date of filing: 25.03.1996
(51) Int. Cl.: F16D 13/64

(54) **A friction clutch plate assembly**

(30) Priority: 25.03.1995 GB 9506141
(71) Applicant: AUTOMOTIVE PRODUCTS PLC, Leamington Spa Warwickshire CV31 3ER (GB)
(72) Inventor: Nash, Ian Antony, Warwick, Warwickshire CV34 5HB (GB); Grant, Jonathan David, Leamington Spa, Warwickshire CV31 1TL (GB)
(74) Representative: Morrall, Roger

(57) **Abstract**

A clutch plate assembly (20) comprising a disc of friction material (21) with drive formations (23), metallic drive members (33L,33S) and an adhesive material (19) which bonds the metallic drive members into the drive formations of the friction material. The disc of friction material may be formed from a carbon/carbon composite. The drive members maybe integral with a clutch hub (31) or they may consist of disc inserts. The adhesive material maybe an elastomeric adhesive or a rigid adhesive.

## Description

The present invention relates to friction clutch plate assemblies, and in particular though not exclusively to clutch plate assemblies incorporating so called carbon/carbon composite clutch discs for motor vehicles i.e. clutch discs formed from a carbon based matrix filled with a carbon based filler.

Known carbon/carbon clutch assemblies comprise a stack of interleaved carbon/carbon drive and driven discs which are biased into engagement. Each drive disc or the sack has a set of drive formations which engage with a set of teeth on a housing of the clutch and each driven disc also has a set of drive formations which engage a set of teeth on an output hub which transmits torque to an associated drive line. Each drive formation has a drive and over-run surface which engages respectively with a drive and over-run surface of the corresponding housing or hub tooth to transmit torque in drive and over-run directions respectively. Due to manufacturing tolerances there is a small amount of circumferential play between each disc and its corresponding hub or housing. Torque reversal in the drive line causes one set of the drive or over-run surfaces of the drive formations to disengage their corresponding surfaces on the associated teeth and then the other set of the drive or over-run surfaces of the drive formations engage the other corresponding surfaces on the teeth.

This engagement can be rapid and severe, and repeated engagements will cause hammering type compression damage to the drive and over-run surfaces of the drive formations. This damage can be severe enough to make the carbon/carbon disc unservicable.

The present invention mitigates the above problem and therefore increases the service life of the clutch discs.

Thus according to the present invention there is provided a clutch plate assembly comprising a disc or friction material with drive formations, metallic drive members and an adhesive material which bonds the metallic drive members into the drive formations of the friction material.

The disc of friction material may be formed from a carbon/carbon composite.

The drive members maybe integral with a clutch hub or they may consist of disc inserts.

The adhesive material maybe an elastomeric adhesive or a rigid adhesive.

Also according to the present invention there is provided a method of manufacture of a friction clutch plate assembly comprising the steps of:-
a) assembling a disc of friction material with drive formations on to a clutch hub with drive members.
b) injecting an adhesive material between the drive formations and the drive members to bond the drive formations to the drive members to form the complete friction clutch plate assembly.
c) curing the adhesive by placing the complete friction clutch plate assembly in a suitable environment.

Two embodiments of the present invention will now be described by way of example with reference to the accompanying drawings in which:-
Figure 1 is an elevation of a clutch and a clutch plate assembly according to the present invention taken in the direction of arrow A of figure 2 looking towards an associated engine,
Figure 2 is a section view taken along the line BB of figure 1,
Figure 3 is an enlarged view of part of figure 2 showing a clutch plate assembly only,
Figure 3a shows part of figure 3,
Figure 3b is a view of figure 3a in the direction of arrow G,
Figure 4 is an isometric cut away view of the clutch plate assembly of figure 3,
Figure 5 is a partial section view of a clutch plate assembly taken in the direction of arrow H of figure 3,
Figure 5a is a partial section view along the line JJ of figure 5,
Figure 5b and 5c are partial elevation and partial cross section views of a modified housing and a clutch plate assembly according to the present invention,
Figure 6 is an elevation of a second embodiment of a clutch and plate assembly according to the present invention taken in the direction of arrow D of figure 7 looking towards an associated engine,
Figure 6a is an enlarged partial view of figure 6 showing a hub and clutch plate assembly only (only one plate insert is shown for clarity),
Figure 7 is a section view taken along the line E-E of figure 6,
Figure 8 is a front elevation of a plate insert,
Figure 9 is a side elevation of the plate insert of figure 8,
Figure 10 is a plan view of the plate insert of figure 8,

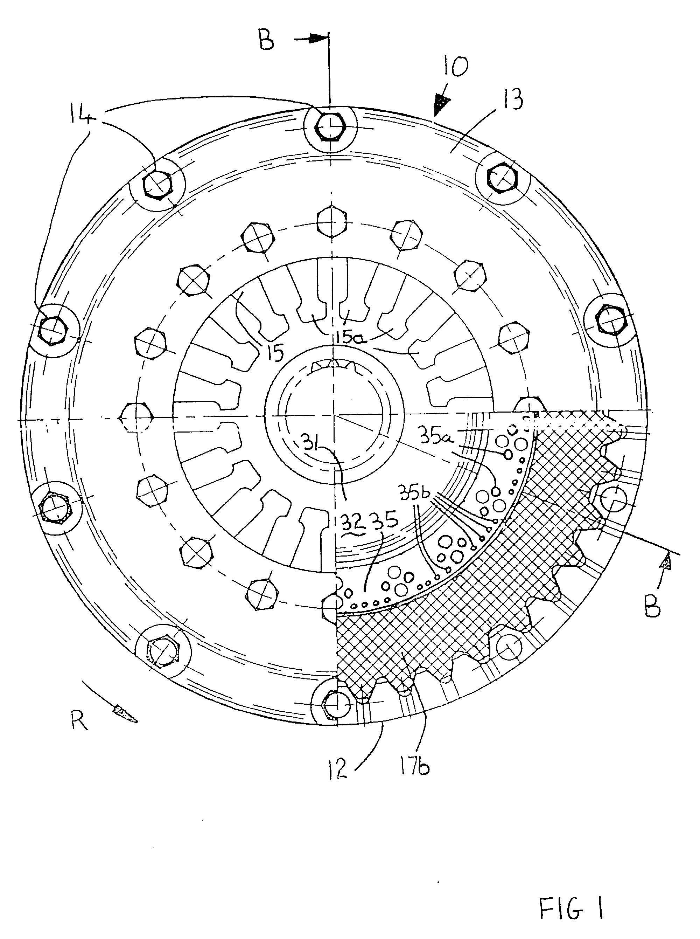

With reference to figures 1 to 5a there is illustrated a multi-plate clutch assembly 10 which comprises a flywheel 11, housing 12 and cover 13 all joined together by bolts 14. Flywheel 11 is fixed to an associated crankshaft of an engine (not shown). Axially between the cover 13 and flywheel 11, there are three drive discs of friction material 17a, 17b, 17c and a pressure plate 16, all axially slidable and substantially rotationally fast with the housing 12. Two driven clutch plate assemblies 20, 40 in accordance with the present invention are interleaved between drive discs 17a, 17b and 17b, 17c respectfully. Two belleville springs 15 bias the pressure plate onto drive disc 17c which in turn biases the remaining drive discs and driven clutch plate assemblies together.

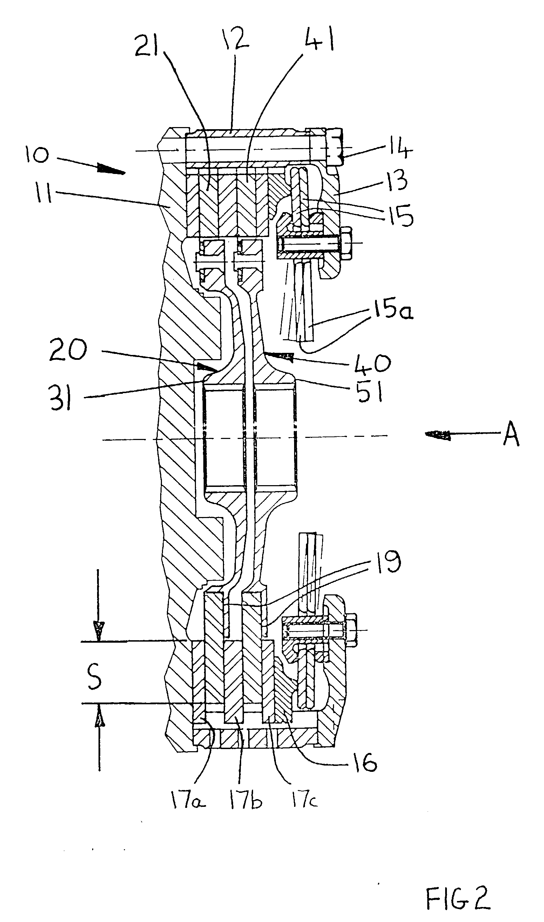

Operation of the clutch 10 is well known in the art, that is a push release bearing (not shown) acts axially in the direction of arrow A of figure 2 on spring fingers 15a of belleville springs 15 to release the clutch. Withdrawal of the release bearing re-engages the clutch.

Adjacent drive discs and driven clutch plate assemblies frictionally engage over an annular area of friction material of radial extent S. This annular area is known as the swept surface of the disc. Drive discs 17a and 17c have one swept surface each and drive disc 17b and driven clutch plate assemblies 20 and 40 each have two continuous annular swept surfaces.

It should be noted that all the swept surfaces of the clutch assembly are contained on five discs of friction material i.e. on discs 17a, 17b, 17c, 21, and 41 and since in this case all the discs are made of the same friction material namely, a carbon/carbon composite, contact between any two immediately adjacent swept surfaces advantageously results in contact of two materials which are the same.

Driven clutch plate assemblies 20 and 40 primarily comprise driven discs of friction material 21 and 41 which are bonded by adhesive 19 to hubs 31 and 51 respectively.

Hubs 31,51 are rotatably fast and axially slidable on the main input shaft to an associated gear box (not shown).

Since driven clutch plate assemblies 20 and 40 are identical apart from the cross section shape of the hubs 31,51 radially in board of the clutch discs 21, 41, only clutch plate assembly 20 will be described in detail.

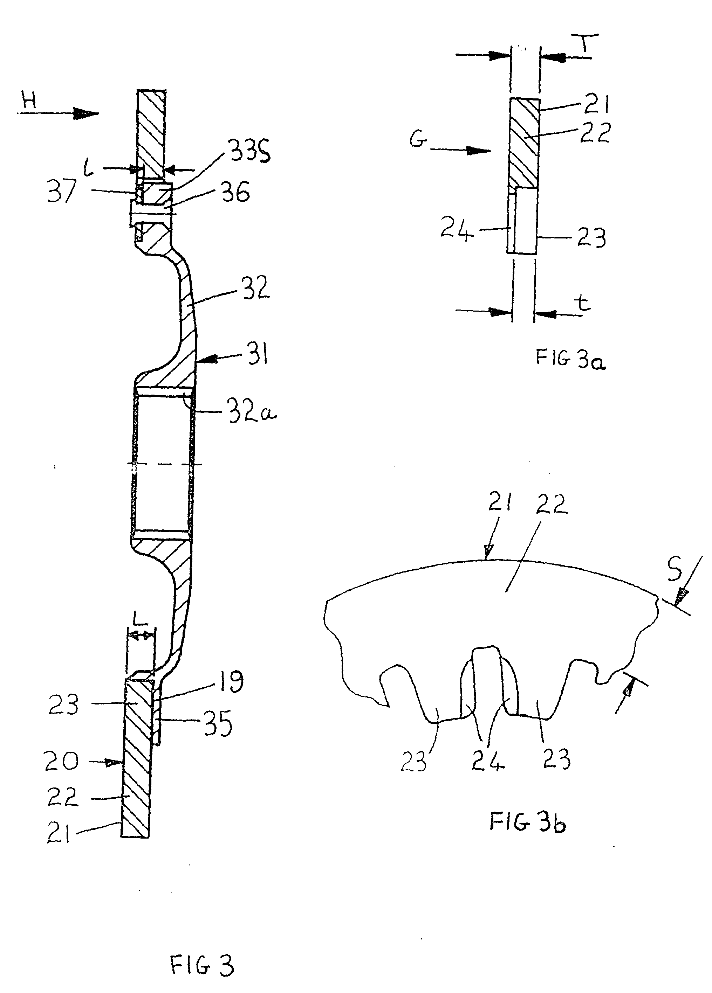

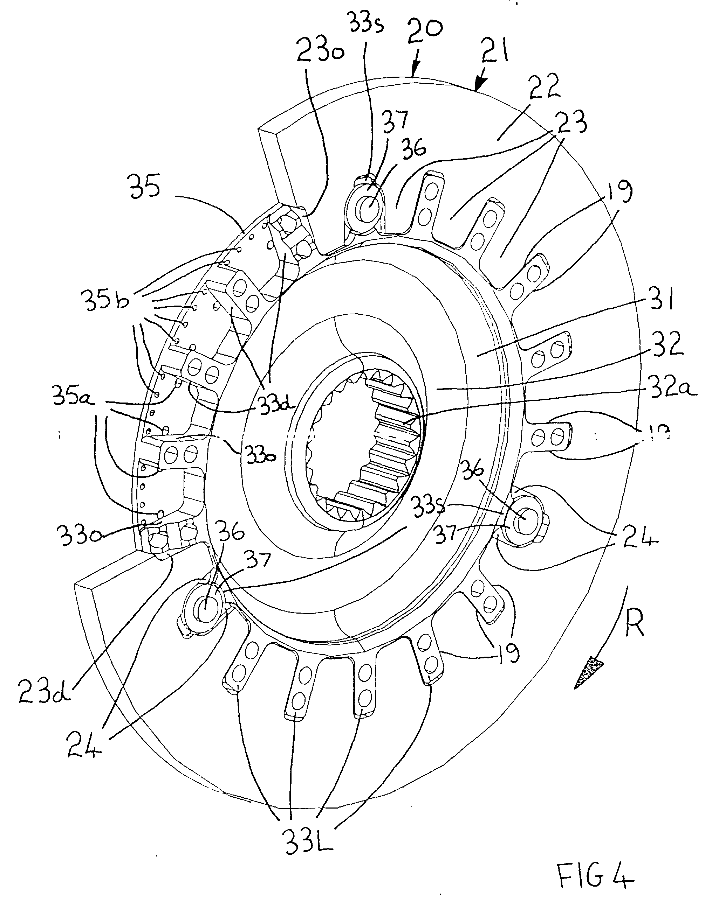

Disc 21 is made from a carbon/carbon composite. It has an annular body 22 with a swept surface on each axial side which is radially outboard of a plurality of drive formations 23. Each drive formation 23 has a drive surface 23d and over-run surface 23o (see Figure 4) which extend from one axial side of the disc to the other and substantially lie on a radial plane of the disc. The disc 21 is of constant thickness T (see Figure 3a) apart from three recessed areas 24 which are circumferentially equispaced, and each area borders two adjacent drive formations. The thickness of the disc 21 in the recessed areas 24 is t.

Hub 31 is made from a metal such as titanium or aluminium and is therefore considerably stronger than the disc 21. It consists of an annular body 32 with a splined bore 32a which in use engages the input shaft of a gearbox (not shown).

Radially outboard of the annular body 32 there are a plurality of drive members in the form of axially long teeth 33L (see Figure 4) and a plurality of axially short teeth 33S which teeth 33L and 33S have drive surfaces 33d and overrun surfaces 33o which substantially lie on a radial plane of the hub. On one axial side of the teeth 33L,33S there is a flange 35. The axial length L (see Figure 3) of the long teeth 33L, that is the distance from their junction with the flange to their end remote from the flange, is slightly greater than the axial thickness T of the disc 21. This ensures that when assembled the drive and over-run surfaces 23d, 23o have a full bearing contact area. The axial length 1 (see Figure 3) of the short teeth 33S is slightly greater than the axial thickness t of the disc 21 in the recessed areas 24.

The flange has a plurality of injection holes 35a, (in this case two holes per corresponding drive formation 23) and a plurality of bleed holes 35b (in this case 4 holes per corresponding drive formation 23).

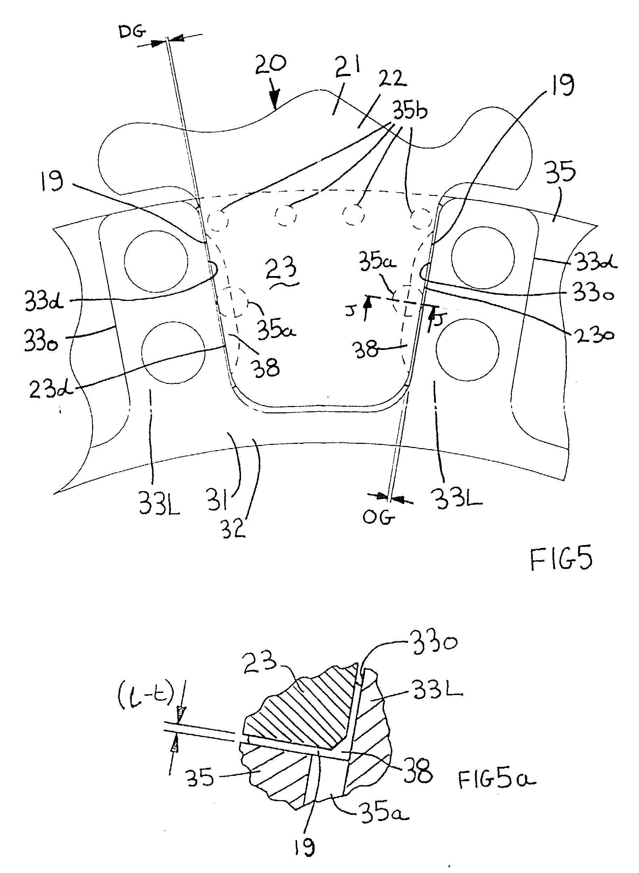

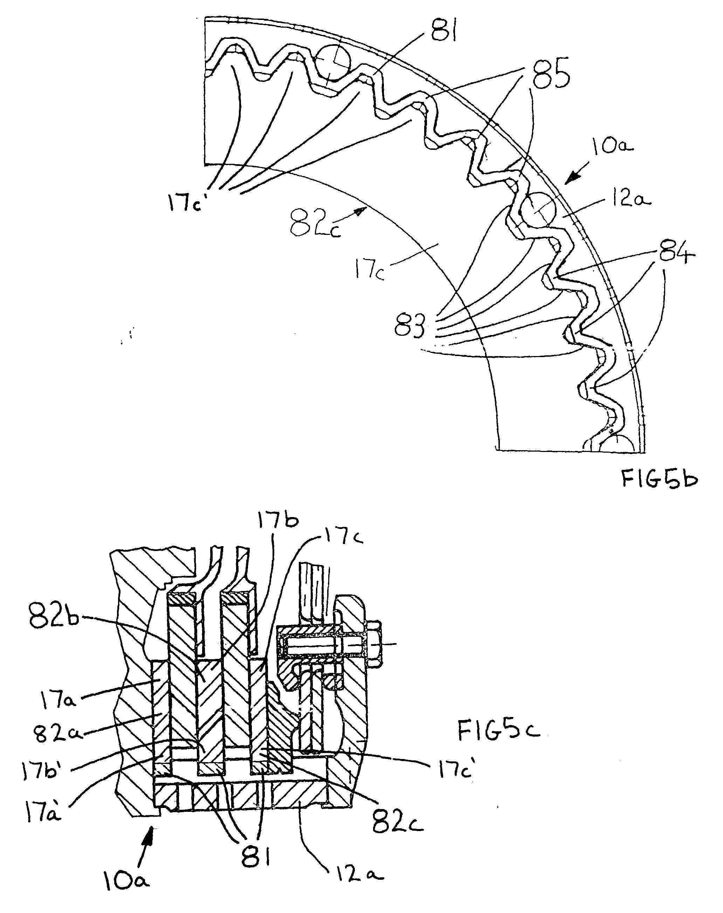

The driven clutch plate assembly is built as follows:
1) The disc 21 is mounted onto the hub 31 with the recessed areas 24 remote from the flange 35 and aligned with respective short teeth 33S.
2) A rivet 36 is inserted through an axial hole in each short tooth, a washer 37 fitted over each rivet, and the rivet heads peened over to secure the washer and hence secure the disc 21 onto the hub 31 to form a sub assembly. Because the axial length 1 of the short teeth 33S is slightly greater than the axial thickness t of the disc 21 in the region of the recess 24, the disc is free to float axially to a limited extent by an amount (1-t). Typically (1-t) would be 0.15mm.
3) The sub assembly is mounted horizontally in a jig via the hub, with the flange 35 uppermost. This allows the disc 21 to fall away from the flange by the distance (1-t).
4) A number of shims (for example six) of appropriate thickness are placed adjacent a plurality of (for example three) equispaced drive formation in the drive and overrun gaps to circumferentially centralise the disc relative to the hub.
5) Shields are clamped around the swept surface of the disc 21.
6) An uncured adhesive material 19 in paste form, for example a RTV elastomer or a 2 part epoxy, is then injected through a pair of injection holes 35a of a non-shimmed drive formation. Aligned with each injection hole 35a there is an internal space in the form of a manifold volume 38 (see Figure 5a). This manifold volume is formed by a chamfer on the edge of the drive formation 23 and adjacent portions of the flange 35 and hub tooth drive 33d or over-run 33o surfaces (see figure 5a).
   During injection this manifold volume 38 readily fills with adhesive and subsequently the adhesive is squeezed between the flange 35 and drive formation 23 i.e. though the gap (1-t), and between the drive gap DG (see Figure 5) between drive surfaces 33d, 23d on the hub and disc and between the over-run gap OG i.e. between over-run surfaces 33o, 23o on the hub and disc. Eventually the adhesive will find its way out of the bleed holes 35b. These bleed holes fulfil the dual function of assisting in ensuring no adhesive contaminates the swept surface of the disc 21 and also acting as witness holes showing when sufficient adhesive has been injected.
7) Stage 6 above is repeated through the injection holes 35a of all non-shimmed drive formations.
8) The shims are removed and stage 6 above repeated for the remaining pairs of drive formation injection holes 35a.
9) The adhesive is allowed to cure. The curing process varies with the adhesive used and may require elevated temperatures and/or specific humidity levels.
10) Excess adhesive is removed.

The adhesive can be a rigid type of adhesive such as an epoxy adhesive for example CYANAMID'S (trademark) product reference HT424 or the adhesive can be a non rigid elastomeric adhesive such as a room temperature vulcanising (RTV) elastomer for example DOW CORNINGS (trademark) product reference Q3/3493.

By using a rigid adhesive no rotation of the disc 21 relative to the hub 31 occurs following cure and hence no hammering action occurs between drive formations 23 and drive members (teeth 33L, 35S) and significant improvements in the service life of the discs are achievable.

By using a non rigid elastomeric adhesive slight rotation of the plate 21 relative to the hub 31 can still occur by deformation of the elastomer, however no hammering action between drive formations 23 and drive members (teeth 33L,35S) occurs because relative rotational movement between the disc and hub is cushioned by the elastomer and significant improvements in service life of the discs are achievable.

The injection of the adhesive 19 has significant advantages over the applying of adhesive to either hub 31 or disc 21 prior to assembly. In the latter case, by the time the last, say, disc drive formation 23 has had the adhesive applied to it in a reasonably ever layer, the surface of the adhesive on the first drive formation to be so treated will have started to cure and form a skin which when the hub and disc are assembled, will not properly bond to the teeth (33L,33S) of the hub and may cause voids in the drive gap DG or over-run gap OG. By injecting the adhesive 19, after the hub 31 and disc 21 have been assembled, around each drive formation 23 in turn, no semi-cured skin problems occur and the likelihood of voids is reduced.

It will be appreciated that the geometry of the teeth 33L,33S flange 35, drive formations 23, manifold 38, injection holes 35a, bleed holes 35b, drive gap DG, over-run gap OG and the gap between flange and drive formations (1-t) are all important parameters in ensuring a complete layer of adhesive 19 is achieved between the drive gap DG and over-run gap OG.

In a traditional hub mounted friction plate the drive formations 23 and teeth 33L,33S are machined to give the minimum circumferential play between hub 31 and disc 21 consistent with still being able to assemble the components. It has been found advantageous to increase the circumferential play i.e. increase the drive gap DG and over-run gap OG to ensure proper flow of adhesive into the driving gap DG and over-run gap OG. A value of 0.12mm nominal for the drive gap DG and over-run gap OG has been found to be advantageous, i.e. greater than 0.lmm. This gives a total nominal circumferential play of 0.24mm i.e. greater than 0.2mm.

Use of a non-rigid elastomer is of significant advantage when the disc 21 and hub 31 have different co-efficients of thermal expansion. Any mismatch in thermal growth between disc 21 and hub 31 as the clutch 10 heats up during use can be accommodated by the elastomer whilst still maintaining its cushioning function.

Further embodiments of the invention could have a different profile of drive lugs, for example involute tooth profile.

As the disc of friction material wears thinner with use of the clutch or as the clutch is engaged or disengaged the whole of each clutch plate assembly 20, 40 moves axially as required since its hub 31, 51 can slide axially on the main input shaft to the associated gear box.

Also the invention is not restricted to hubs radially inside a disc. Figure 5b and 5c show a modified clutch 10a in which each drive disc 17a, 17b, 17c has respective external teeth 17a', 17b', 17c' radially out board of their respective swept surfaces. A separate drive member in the form of an internally and externally toothed ring 81 is mounted, via an adhesive, on each set of teeth 17a', 17b', 17c' of each drive disc 17a, 17b, 17c, to form clutch plate assemblies 82a, 82b, 82c respectively. Each clutch plate assembly 82a, 82b, 82c has adhesive 83 between the disc 17a, 17b, 17c and the inner teeth 84 of each corresponding ring 81. The external teeth 85 of each ring 81 engage in a modified housing 12a.

The clutch plate assemblies 82a, 82b, 82c can also move axially as required since each corresponding drive member 81 can slide axially in the modified housing 12a. Clutch plate assemblies 82a, 82b,82c could be used with a modified housing 12a in place of discs 17a,17b, and 17c and housing 12 of Figure 2.

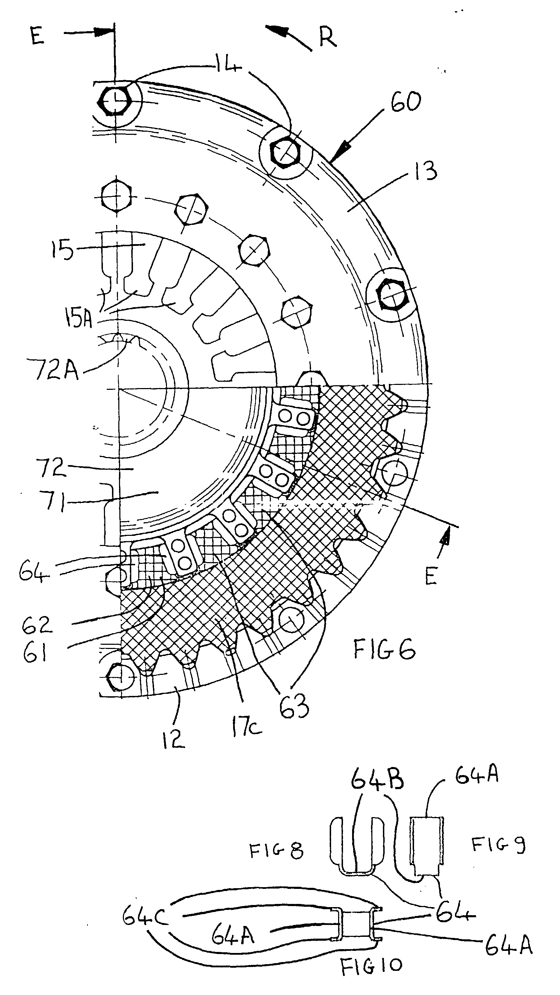

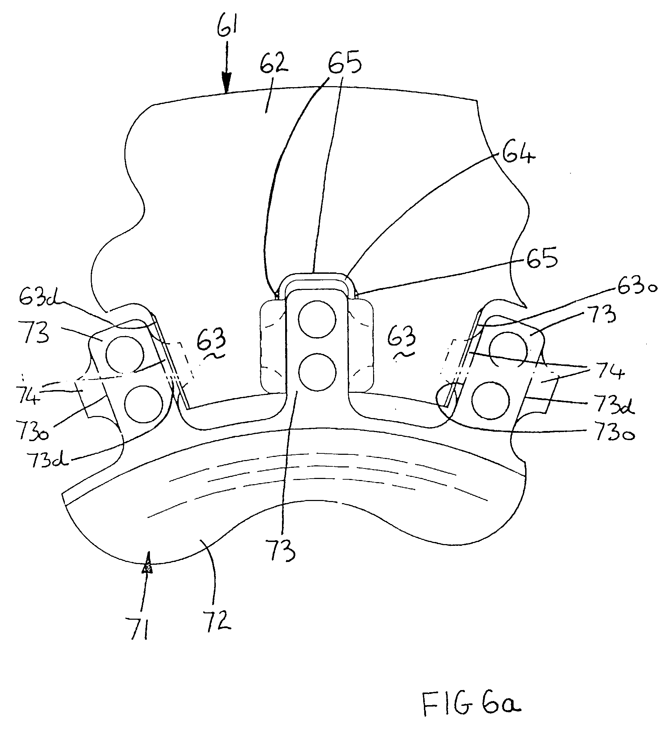

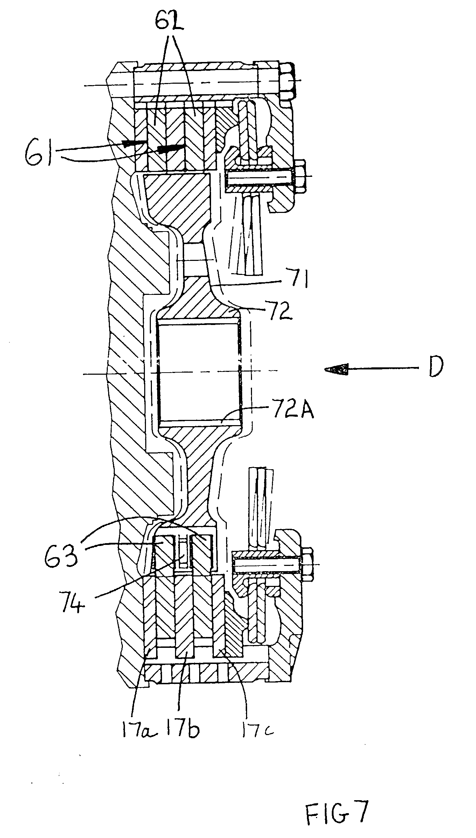

Also the invention is not restricted to applying the adhesive between a substantially annular disc and a substantially annular ring or hub, the adhesive could be applied between drive formations of a disc and drive members which are in the form of individual disc inserts (mounted between adjacent drive formation of the disc) see figures 6 to 10.

The clutch assembly 60 is identical to the clutch assembly 10 as shown in figure 1 except for the clutch driven plate assemblies 61 and the common hub 71.

Both clutch driven plate assemblies 61 are identical. Each driven plate assembly 61 consists of a driven disc of friction material 62 with a plurality (in this case 18) drive formation 63. Fixed in the gap between each pair of adjacent drive formation is a separate metallic drive member in the form of a disc insert 64.

Between the drive surface 63d of each drive formation 63 and its corresponding insert 64 and between the over-run surface 63o each drive formation 63 and its corresponding insert 64 is an adhesive 65.

The adhesive 65 is provided at this position by the inserts 64 and/or drive formations 63 having uncured adhesive material applied to appropriate surfaces and then assembling each insert 64 to the disc 62. After assembly the adhesive 65 is allowed to cure. The adhesive could be a rigid adhesive or a non rigid elastomeric adhesive.

The inserts 64 are typically made form a relative strong material such as stainless steel. They are in the form of a substantially U-shaped clip with two arm portions 64A which transmit torque in the drive and over-run directions joined by a base portion 64B. Furthermore it can be advantageous to include abutment portion 64C on the U-shaped clip to ensure that it does not move axially relative to the disc.

The common hub 71 is made from a metal such as titanium or aluminium. It consists of an annular body 72 with a splined bore 72A which engages the input shaft of a gear box (not shown). Radially outboard of the body there are a plurality of teeth 73 (in this case 20) with drive surfaces 73d and over-run surfaces 73o. The teeth have sufficient axial length to fully engage the disc inserts 64 of the plate assembly when assembled into the clutch 60 and spaced apart by the drive disc 17b. Approximately half way along the length of each tooth 73 on both its drive and over-run surfaces 73d,73o there is a lug 74 which, in use lies axially between two drive formations of adjacent driven discs 62.

Both driven plate assemblies 61 can also move axially as required since the drive members 64 can slide axially to a limited extent on the hub 71, and are also rotationally substantially fast on the hub 71. Thus it is apparent that the lugs 74 axially position the hub 71 relative to the rest of the clutch assembly 60.

It is apparent that torque in the drive direction will pass in turn through drive surfaces 63d of driven disc 62, to the adhesive material 65, to the plate inserts 64 and to the drive surfaces 73d of hub teeth 73.

A torque reversal to the over-run direction will cause a hammering effect between the over-run surfaces 73o of the hub teeth 73 and the disc inserts 64, as the slight circumferential play between teeth 73 and insert 64 is taken up. However, the hub teeth and insert materials are capable of withstanding these types of loads. The insert 64 does not hammer on the over-run surface 63o of the driven disc 62 because of the layer of adhesive between the insert and over-run surface 63o.

A further torque reversal to the drive direction will not cause a hammering effect between the insert 64 and the drive surfaces 63d of the driven plate 63.

The driven plates assemblies 61 have an increased service life due to the adhesive material 65.

Inserts could be applied to the teeth of a disc of friction material with only external teeth for example modified drive plates 17a,17b,17c of clutch assemblies 10 or 10a.

One of the main features of the present invention is the provision of a clutch plate assembly in which a relatively weak disc of friction material (21,41,62,82) is united with relatively strong metal drive members (31,51,64,81) by adhesive so that drive can be transmitted to and from the friction material via the metal drive members with any hammering effect on torque reversal being taken primarily by the more wear resistant metal drive members. The hammering effect is further reduced by the use of adhesive, as explained above, which reduces any circumferential play between the disc of friction material and the metal drive members. The hammering effect is still further reduced by the use of elastomeric adhesive.

All of the clutch plate assemblies described above comprise of at least 3 separate components, a disc of friction material, a metal drive member and an adhesive material which bonds the drive member to the disc of friction material.

Also, whilst the adhesive is in the torque path between the crankshaft of an associated engine and the input shaft to an associated gearbox, the adhesive is not in the axial clamp path of the belleville spring which biases the drive and driven discs together when the clutch is engaged. Thus the adhesive does not affect the clamp load and in particular an elastomeric adhesive does not cushion the engagement of the clutch as the driver of an associated vehicle lifts his or her foot off the clutch pedal.

## Claims

1. A clutch plate assembly comprising a disc of friction material with drive formations, metallic drive members and an adhesive material which bonds the metallic drive members into the drive formations of the friction material.

2. A clutch plate assembly as defined in Claim 1 in which the friction material is made from a carbon/carbon composite material.

3. a clutch plate assembly as defined in claims 1 or 2 in which the drive members are integral with a clutch hub.

4. A clutch plate assembly as defined in claims 1 or 2 in which the drive members consists of disc inserts.

5. A clutch plate assembly as defined in any preceding claim in which the disc of friction material has drive formations formed on it inner periphery.

6. A clutch plate assembly as defined in claims 1, 2 or 4 in which the disc of friction material has drive formations formed on its outer periphery.

7. A clutch plate assembly as defined in any preceding claim in which the adhesive material is an elastomeric adhesive material.

8. A clutch plate assembly as defined in any of claims 1 to 6 in which the adhesive material is a rigid adhesive.

9. A friction clutch plate assembly as defined in any previous claim in which there are feed passages in the disc of friction material or the drive member through which the adhesive material is injected to a location between the friction material and drive member during manufacture of the assembly.

10. A friction clutch as defined in claim 9 when dependant upon claim 3 in which the feed passages are formed in a flange of the hub.

11. A friction clutch as defined in claims 9 or 10 in which the adhesive material as injected into a manifold volume formed between the friction material and the drive members.

12. A friction clutch plate assembly as defined in any one of claims 9 to 11 in which the disc and the metallic drive member are built as a sub assembly with the disc axially spaced relative to a flange of the metallic drive member prior to injection of the adhesive material.

13. A friction clutch plate assembly as defined in any previous claim in which the adhesive material forms a layer in the torque path between the disc and the metallic drive member and the layer is greater that 0.1mm thick.

14. A clutch assembly including a clutch plate assembly according to any one of claims 1 to 13.

15. A method of manufacture of a friction clutch plate assembly comprising in the steps of:-
a) assembling a disc of friction material with drive formations on to a clutch hub with drive members.
b) injecting an adhesive material between the drive formations and the drive members to bond the drive formations to the drive members to form the complete friction clutch plate assembly.
c) curing the adhesive by placing the complete friction clutch plate assembly in a suitable environment.

16. A method of manufacture of a friction clutch plate assembly as defined in Claim 15 in which the adhesive material is injected through feed passages in the disc of friction material or the drive members.

17. A method of manufacture of a friction clutch plate assembly as defined in Claim 15 or 16 in which the adhesive material is injected into a manifold volume formed between the friction material and the drive members
